# EUROPÄISCHE PATENTSCHRIFT

(11) **EP 2 559 640 B1**
(45) Veröffentlichungstag und Bekanntmachung des Hinweises auf die Patenterteilung: **02.03.2016**
(21) Anmeldenummer: 11009808.4
(22) Anmeldetag: 14.12.2011
(51) Int. Cl.: B65G 47/91, B65B 21/18

(54) **Greifer für Flaschen sowie Bearbeitungsmaschine mit einer Anzahl von Greifern und Verfahren zur Handhabung von Flaschen**
Gripper for bottles and processing machine with a number of grippers and method for handling bottles
Poignée pour bouteilles ainsi que machine de traitement équipée d'un certain nombre de poignées et procédé de manipulation des bouteilles

(30) Priorität: 17.08.2011 DE 102011110450
(43) Veröffentlichungstag der Anmeldung: 20.02.2013
(73) Patentinhaber: RST Automatisierungstechnik GmbH, 93092 Barbing/Unterheising (DE)
(72) Erfinder: Hadersbeck, Rupert, 84066 Mallersdorf-Pfaffenberg (DE); Gau, Georg, 93083 Obertraubling (DE)
(74) Vertreter: FDST Patentanwälte

(56) Entgegenhaltungen:
- WO-A1-02/096754
- WO-A2-2010/140794
- AU-B2- 449 346
- DE-A1- 2 040 198
- DE-A1- 2 460 809
- DE-A1- 3 728 291
- DE-A1- 19 912 378
- DE-C- 914 480
- DE-C1- 10 224 598
- DE-U1- 20 109 221
- FR-A1- 2 782 313
- GB-A- 1 158 847

## Beschreibung

Die Erfindung betrifft einen Greifer für Flaschen mit den Merkmalen des Oberbegriffs des Anspruchs 1, eine Bearbeitungsmaschine mit einer Anzahl von derartigen Greifern sowie ein Verfahren zur Handhabung von Flaschen mit einem derartigen Greifer.

Ein derartiger Greifer ist beispielsweise zu entnehmen aus der WO 2010/140794 A2.

Derartige Greifer für Flaschen, werden in Bearbeitungs- oder Handhabungsmaschinen zum Umpacken, Einpacken sowie Auspacken von Flaschen eingesetzt werden.

Derartige Greifer weisen üblicherweise eine oftmals auch als Tulpe bezeichnete Hülse auf, die mit einem hohlzylindrischen Hülsenkörper über den jeweiligen Flaschenhals der Flasche gestülpt wird. In der Hülse/Tulpe ist eine mechanische Greifvorrichtung angeordnet, die nach dem Überstülpen der Tulpe die Flasche am Flaschenhals greift und beispielsweise mittels Druckluft betätigt wird. Ein derartiger Greifer ist beispielsweise aus der DE 201 05 167 U1 zu entnehmen. Die Greifmechanik ist hierbei oftmals aufwändig ausgestaltet und muss für unterschiedliche Flaschentypen jeweils angepasst werden. Dies macht eine Bevorratung von unterschiedlichen Tulpentypen erforderlich und führt zu Umrüstzeiten, wenn der Flaschentyp gewechselt wird.

Das Greifen von Gegenständen mithilfe von Vakuumgreifern ist aus dem Stand der Technik als Alternative hierzu bekannt. So ist beispielsweise aus der WO 2010/140794 A2 ein Greifer zu entnehmen, welcher eine mit Unterdruck beaufschlagbare Hülse aufweist, die auf einen Flaschenhals aufgesetzt werden kann. Durch Erzeugen eines Unterdrucks wird die jeweilige Flasche gegriffen. In den Boden der Hülse ist ein Saugrohr fest eingeschraubt, über das die Luft abgesaugt wird. Innerhalb des Saugrohrs ist ein weiteres Rohr mit einer endseitigen Dichtmembran angeordnet, welche auf eine offene Flaschenöffnung aufgesetzt wird.

In der US 6,244,640 B1 ist ein weiterer Vakuumgreifer zum Greifen von Gegenständen beschrieben, bei dem eine zweiteilige Hülse vorgesehen ist, durch die ein Saugrohr geführt ist. Zwischen die beiden Hülsen ist ein Strömungspfad für Fremdluft vorgesehen, sodass je nachdem ob ein Gegenstand angesaugt wird oder nicht die beiden Teile der Hülse relativ zueinander verschoben werden.

Derartige Vakuumgreifer werden häufig in Greifvorrichtungen zum parallelen Greifen von mehreren Flaschen eingesetzt, wie dies beispielsweise aus der 201 09 221 U1, der DE 914 480 C, der GB 1 158 847 A sowie der gattungsgemässen WO 02/096754 A1 zu entnehmen ist.

Ausgehend hiervon liegt der Erfindung die Aufgabe zu Grunde, einen einfach ausgestalteten Greifer anzugeben, welcher sich insbesondere auch für eine große Bandbreite an unterschiedlichen Flaschentypen einsetzen lässt und der das gleichzeitige Greifen von mehreren Flaschen mit mehreren derartigen Greifern zuverlässig gewährleistet.

Die Aufgabe wird erfindungsgemäß gelöst durch einen Greifer mit den Merkmalen des Anspruchs 1. Danach ist vorgesehen, dass der Greifer eine Vakuumhülse als Tulpe aufweist, die einen Sauganschluss zur Erzeugung eines Unterdrucks in der Hülse umfasst, wenn diese auf den Flaschenhals aufgesetzt ist.

Um beim Aufsetzen der Hülse auf einen Flaschenhals einen gewissen Toleranzspielraum zu ermöglichen ist das Saugrohr gleitverschieblich durch den Hülsen-boden geführt. Diese Ausgestaltung ist von besonderer Bedeutung bei einer Greifvorrichtung mit einer Vielzahl von derartigen Greifern, um Toleranzen in den Höhenpositionen der Flaschen und/oder der einzelnen Greifer ausgleichen zu können. Insgesamt ist dabei vorgesehen, dass durch die Gleitlagerung des Saugrohrs ein Höhenhub von beispielsweise 10 bis 20 mm ermöglich ist. Das Saugrohr ist hierbei innerhalb des Hülsenbodens bevorzugt passgenau geführt, wobei die Kontaktfläche zwischen Saugrohr und Hülsenboden insbesondere eine Art Gleitdichtung bildet, um die Erzeugung eines Unterdrucks im Innenraum der Hülse zu ermöglichen.

Das Saugrohr selbst ist weiterhin an einem Halter befestigt. Der Halter weist den Sauganschluss auf, über den eine Saug- oder Unterdruckleitung, beispielsweise ein Saugschlauch etc. vorzugsweise über eine Schnellkupplung anschließbar ist.

Weiterhin ist der gleitverschiebliche Bereich des Saugrohres von einem insbesondere als Faltenbalg / Dichtbalg ausgebildeten Abdichtelement umgeben, und zwar derart, dass ein Ansaugen von Umgebungsluft in die Hülse vermieden ist. Der Faltenbalg ist dabei mit seinem einen Ende an einem Halteansatz befestigt, der bevorzugt Teil des Hülsenbodens ist und in dem das Saugrohr geführt ist. Das zweite Ende des Faltenbalgs ist am Halter insbesondere an einem Halteflansch befestigt. Der Faltenbalg ist bevorzugt jeweils mit Klemmen abdichtend befestigt.

Zweckdienlicherweise wird die Flasche ausschließlich mit Hilfe des erzeugten Unterdrucks "gegriffen". Weitere insbesondere mechanische Greifelemente sind nicht vorgesehen. Der hohlzylindrische Hülsenkörper ist dabei frei von jeglichen Einbauten und umschließt einen freien Innenraum.

Zum Greifen einer jeweiligen Flasche wird hierbei der üblicherweise hohlzylindrische Hülsenkörper der Hülse auf den Flaschenhals aufgesetzt, und zwar derart, dass zwischen Flaschenhals und Hülse eine umlaufende, ringförmige Dicht- und Kontaktfläche ausgebildet wird. Über den Sauganschluss wird die im Inneren der Hülse befindliche Luft abgesaugt, wodurch ein Unterdruck entsteht. Anschließend kann die Flasche mittels des Greifers angehoben werden. Die Haltekraft wird dabei ausschließlich durch den erzeugten Unterdruck in der Hülse aufgebracht.

Die Ausgestaltung als Vakuumhülse hat den besonderen Vorteil, dass der Greifer für unterschiedlichste Flaschenhälse und -verschlüsse geeignet ist, da lediglich eine ringförmige Kontaktfläche zum Flaschenhals ausgebildet werden muss. Da die Flaschenhälse üblicherweise einen kreisrunden Querschnitt haben, ist dies über eine große Bandbreite von unterschiedlichen Flaschentypen ermöglicht. Auf die spezielle Formgebung des Flaschenhalses, beispielsweise ein umlaufender Greifring, wie dies bei PET-Flaschen üblich ist, oder ein spezieller Verschlusstyp, wie er beispielsweise in der DE 10 2009 021 161 A1 beschrieben ist und der eine Aufreißlasche aufweist, kommt es daher für die Funktionsfähigkeit des auch als Vakuumgreifers bezeichneten Greifers nicht an.

Durch die große Bandbreite an möglichen Flaschentypen ist der Greifer universell einsetzbar und es brauchen nicht für unterschiedliche Flaschentypen unterschiedliche Greifer bevorratet zu sein. Dadurch sind die Investitionskosten für Verpackungs- oder Umpackanlagen im Vergleich zu bisherigen Greifern mit einer mechanischen Greifvorrichtung verringert.

Um eine zuverlässige Abdichtung zu gewährleisten ist an der Hülse ein Dichtelement angeordnet, welches insbesondere als umlaufende Ringdichtung ausgebildet ist. Das Dichtelement besteht hierbei aus einem elastischem Material, insbesondere einem elastischem Kunststoff oder auch einem Dichtgummi.

Zweckdienlicherweise steht dabei das Dichtelement in Längsrichtung der Hülse betrachtet über den Hülsenkörper über und bildet das stirnendseitige Ende der Hülse. Bevorzugt ist dabei das Dichtelement in einem Befestigungsabschnitt des Hülsenkörpers befestigt. Durch die überstehende Anordnung des Dichtelements wird eine hohe Flexibilität im Hinblick auf die Dichtwirkung erzielt. Beim Aufsetzen schmiegt sich das elastische Dichtelement an den Flaschenhals an. Durch die freiendseitige Anordnung kann das Dichtelement hierbei radial auch etwas ausweichen. Die endseitige Anordnung des Dichtelements weist auch Vorteile beim Freigeben der Flaschen auf, da hierdurch ein zu starkes Haften des Dichtelements am Flaschenhals verhindert ist, was beim Freigeben der Flasche von Nachteil wäre. In diesem Zusammenhang hat sich herausgestellt, dass eine möglichst kurze überstehende Länge von etwa lediglich 3 bis 8 mm von besonderem Vorteil ist um ein einfaches Freigeben wieder zu ermöglichen.

Zur Befestigung des Dichtelements ist dieses vorzugsweise außenseitig im Befestigungsabschnitt über den Hülsenkörper gestülpt. Das Dichtelement wird vorzugsweise lediglich elastisch und/oder klebstoffunterstützt gehalten. In zweckdienlicher Weiterbildung ist hierbei vorgesehen, dass der Hülsenkörper im Befestigungsabschnitt in seinem Außendurchmesser reduziert ist, so dass der Gesamtaußendurchmesser im Bereich des übergestülpten Dichtelements nicht oder nur geringfügig im Vergleich zum restlichen Hülsenkörper vergrößert ist. Da derartige Greifer üblicherweise in einer Bearbeitungsmaschine oder Greifvorrichtung unmittelbar nebeneinander angeordnet eingesetzt werden, darf der Außendurchmesser eine vorgegebene Größe nicht überschreiten. Insbesondere sind für eine prozesssichere Betätigung Überstände und Störkanten am Außenumfang der Hülse möglichst zu vermeiden.

Zu berücksichtigen ist auch, dass die Hülse für unterschiedlichste Flaschen und Flaschenhälse ausgebildet ist und daher einen vergleichsweise großen Innendurchmesser aufweist, der vorzugsweise über 50 mm und insbesondere über 55 mm liegt. Der Außenumfang liegt dabei bei maximal etwa 62 mm.

In zweckdienlicher Weiterbildung ist weiterhin vorgesehen, dass neben dem vergleichsweise großen freien Innendurchmesser auch eine sehr große freie Innenlänge von vorzugsweise über 100 mm und vorzugsweise von etwa 125 mm ausgebildet ist. Innerhalb dieses freien Innenraums ist die Hülse frei von jeglichen Einbauten.

Um beim Aufsetzen eine Beschädigung des Dichtelements zu vermeiden, und damit die Dauergebrauchseigenschaft zu verbessern ist eine endseitige Stirnkante des Hülsenkörpers vorzugsweise abgerundet ausgebildet. Beim Aufsetzen auf den Flaschenhals wird nämlich oftmals das Dichtelement wulstartig um die Stirnkante umgebogen. Eine scharfkantige Ausbildung würde auf Dauer zu einer Verletzung des Dichtelements führen.

Alternativ oder ergänzend ist vorgesehen, dass das Dichtelement stirnendseitig verjüngt, insbesondere abgeschrägt ist. Vorzugsweise ist dabei die radial äußere Seite abgeschrägt, so dass die Innenseite des Dichtelements achsparallel zu einer Mittelachse verläuft. Durch diese Verjüngung wird erreicht, dass das Stirnende des Dichtelements beim Aufsetzen radial nach außen gedrückt werden kann und sich nicht wulstartig um die Stirnkante wölbt.

Im Sinne eines möglichst großen radialen Innendurchmessers ist der Hülsenkörper im Anschluss an den Befestigungsabschnitt verbreitert, der Hülsenkörper weist hierzu im Anschluss an den Befestigungsabschnitt einen stufenartigen Absatz auf. Dieser Absatz ist lediglich an der Innenseite ausgebildet. An der Außenseite weist der Hülsenkörper keine Verbreiterung auf. Durch den vergrößerten Innendurchmesser oberhalb des Befestigungsabschnittes und den reduzierten Außendurchmessers im Befestigungsabschnitt ist der Hülsenkörper im Bereich des Befestigungsabschnitts - in einem Schnitt betrachtet - insgesamt etwa Z-förmig ausgebildet.

Im Hinblick auf eine platzsparende und einfache Ausgestaltung wird ein Saugrohr zur Erzeugung des Unterdrucks durch einen Hülsenboden zum freien Innenraum eingeführt. Zweckdienlicherweise ist dabei der Hülsenboden als ein separates Bauteil ausgebildet, welches am Hülsenkörper beispielsweise schraubbefestigt ist.

Die Längenposition des Saugrohrs bzgl. des Halters ist dabei vorzugsweise einstellbar. Hierzu ist insbesondere eine Schraubverbindung zwischen Halter und Saugrohr vorgesehen, die an unterschiedlichen Höhenpositionen über eine Sicherungsmutter gesichert werden kann. Das Saugrohr weist also endseitig ein Außengewinde auf, mit dem es entsprechend in ein Innengewinde des Halters eingeführt werden kann. Der Halter ist entsprechend nach Art eines Rohres ausgebildet, in das das Saugrohr eingeführt ist. Der durch das Saugrohr gebildete Strömungspfad wird daher im Inneren des Halters zum Sauganschluss weiter geführt.

Zur Anordnung in einer Greifvorrichtung wird der Greifer mit seinem Halter üblicherweise an einer entsprechenden Greiferplatte befestigt. Hierzu wird er mit seinem Halter voraus durch entsprechende Halteöffnungen in der Greiferplatte hindurchgeführt, wodurch sein endseitiger Sauganschluss an einer gegenüberliegenden Oberseite übersteht, so dass an der Oberseite die Saugleitungen an die jeweiligen Sauganschlüsse angeschlossen werden können. Um eine definierte Höhen-Montageposition an der Greiferplatte zu gewährleisten weist der Halter im Bereich unterhalb des Sauganschlusses vorzugsweise einen Anschlag auf, der bei montierter Endstellung an der Greiferplatte anliegt.

Die Aufgabe wird erfindungsgemäß weiterhin gelöst durch Bearbeitungsmaschine oder Greifvorrichtung mit einer Anzahl von Greifern nach Anspruch 1, wobei weiterhin eine Saugpumpe zur Erzeugung eines Unterdrucks vorgesehen ist, die saugseitig über zumindest ein Steuerventil mit den einzelnen Greifern verbunden ist. Grundsätzlich ist die Ausgestaltung einer Greifvorrichtung mit nur einem Greifer möglich. üblicherweise ist jedoch eine Vielzahl von Greifern, beispielsweise 50 bis 100 Greifer, in einer Greifvorrichtung zusammengefasst, um gleichzeitig eine entsprechende Anzahl von Flaschen zu greifen. Die einzelnen Greifer können hier auf mehrere Greiferplatten und/oder in mehreren steuerungstechnischen Gruppen zusammengefasst sein. Die Greifer sind in der Greiferplatte üblicherweise matrixförmig in definiertem Rastermaß angeordnet.

Zweckdienlicherweise ist - je nach Saugleistung - eine einzige Saugpumpe für eine Gruppe von Greifern (z. B. >20) oder für alle Greifer vorgesehen. Im Sinne einer möglichst einfachen Ansteuerung ist die Gruppe von Greifern bzw. sind alle Greifer an einer gemeinsamen Saugleitung angeschlossen, d.h. die einzelnen Greifer werden nicht einzelweise angesteuert. Zur Steuerung der Beaufschlagung der einzelnen Greifer mit dem von der Saugpumpe bereitgestellten Unterdruck ist vorzugsweise für jede Gruppe von Greifern bzw. für alle Greifer lediglich ein Steuerventil vorgesehen.

Die Greifer sind dabei jeweils in Halteöffnungen einer jeweiligen Greiferplatte gehalten, und zwar derart, dass die einzelnen Greifer unmittelbar aneinander benachbart angeordnet sind. Der Abstand zwischen den einzelnen Greifern, also der Abstand zwischen den Hülsen liegt dabei beispielsweise im Bereich von einigen mm.

Die Aufgabe wird erfindungsgemäß weiterhin gelöst durch ein Verfahren zur Handhabung von Flaschen mit einem derartigen Greifer bzw. mit einer derartigen Bearbeitungsmaschine.

Ein Ausführungsbeispiel der Erfindung wird im Folgenden anhand der Figuren näher erläutert. Diese zeigen jeweils in teilweise schematischen Darstellungen:
- FIG 1: eine Querschnittsdarstellung eines Greifers,
- FIG 2: eine ausschnittsweise Vergrößerung der Darstellung gemäß FIG 1 im Bereich des Dichtelements,
- FIG 3: eine schematische ausschnittsweise Darstellung beim Greifen einer Flasche,
- FIG 4: eine stark vereinfachte schematische Darstellung einer Bearbeitungmaschine mit einer Vielzahl von Greifern.

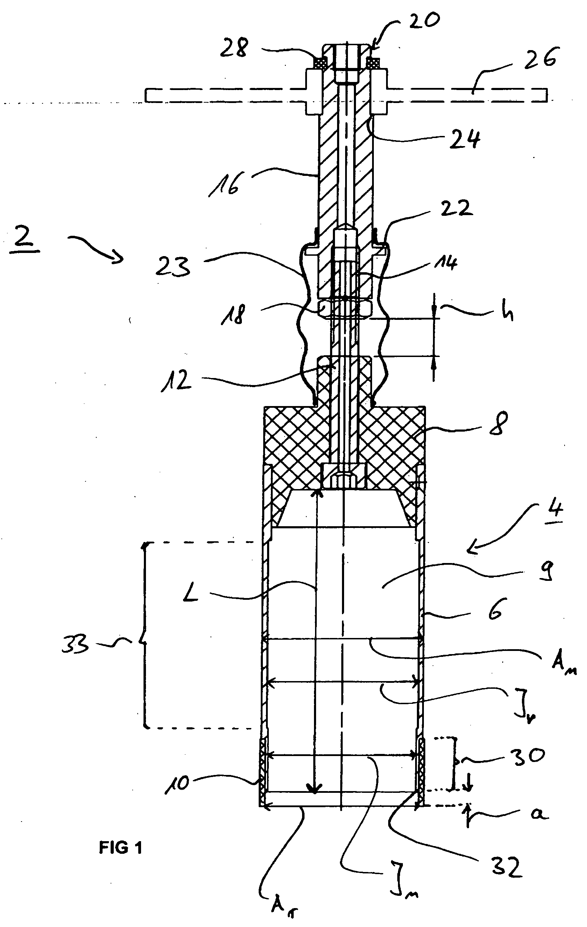

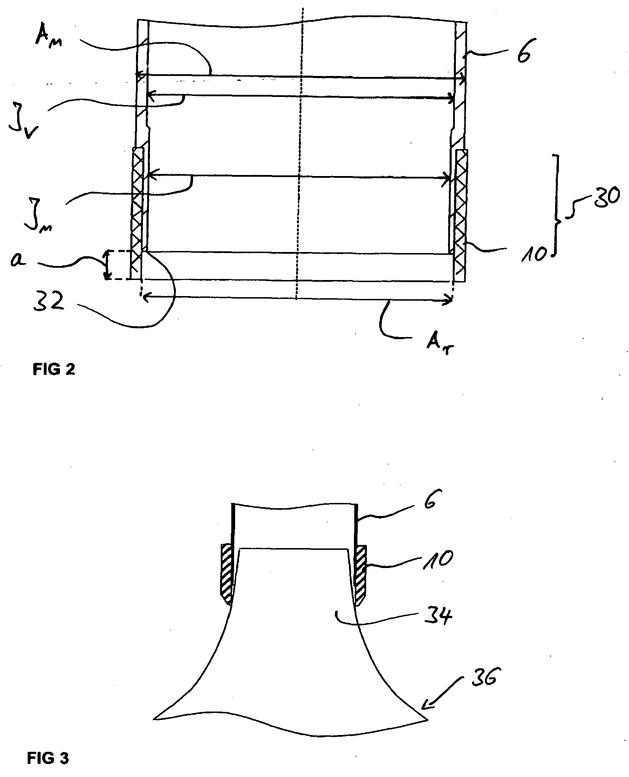

In den Figuren sind gleichwirkende Teile mit den gleichen Bezugszeichen versehen. Die Figuren 1 und 2 geben die tatsächlichen Größenverhältnisse zumindest weitgehend maßstabsgetreu wieder.

Der Greifer 2 weist eine Hülse 4 auf, die als Hülsenkörper ein Hülsenrohr 6 sowie einen Hülsenboden 8 umfasst, die einen freien Innenraum 9 umschließen. Der Hülsenboden 8 ist als separates Bauteil ausgebildet. Endseitig am Hülsenrohr 6 ist ein als Gummidichtung ausgebildetes Dichtelement 10 angeordnet, welches über das Hülsenrohr 6 übersteht. Das Dichtelement 10 ist selbst ebenfalls in etwa hülsenförmig ausgebildet und endseitig über das Hülsenrohr 6 gestülpt.

Der Hülsenboden 8 weist eine zentrale Durchführung auf, in die ein Saugrohr 12 eingesteckt ist. Das Saugrohr 12 weist im Ausführungsbeispiel einen Kopf auf, mit dem das Saugrohr 12 an der Innenseite des Hülsenbodens 8 in einer Kopfaufnahme einliegt. Im Kopf ist ein werkzeugangriff ausgebildet. Das Saugrohr 12 ist im Hülsenboden 8 gleitverschieblich gelagert. Das Saugrohr 12 kann daher um eine Hubhöhe h relativ zum Hülsenboden verschoben werden. In FIG 1 ist die eine Endlage gezeigt, bei der sich die Hülse 4 in der unteren Endlage befindet. Beim Verschieben der Hülse 4 nach oben dringt daher der Kopf des Saugrohrs 12 in den freien Innenraum 9 ein.

Endseitig weist das Saugrohr 12 ein Gewinde 14 auf, auf das ein Halter 16 aufgeschraubt ist. Die Position des Halters 16 ist ergänzend über eine Mutter 18 festgelegt. Endseitig weist der Halter 16 als Sauganschluss 20 eine entsprechende Schnellverschluss-Schnittstelle auf. Der durch das Saugrohr 12 definierte Strömungspfad wird daher im Inneren des Halters 16 weiter geführt.

Im zum Saugrohr 12 hin orientierten Endbereich weist der Halter 16 außenseitig einen umlaufenden Kragen 22 auf. An diesem ist ein Dicht- oder Faltenbalg 23 mit seinem einen Ende befestigt. Dessen zweites Ende ist an einem Halteansatz des Hülsenbodens 8 befestigt. Der Faltenbalg 23 liegt jeweils dichtend am Halteansatz 8 bzw. am Halter 16 an. Damit wird eine zuverlässige Abdichtung sichergestellt und vermieden, dass durch die Lagerstelle des gleitgelagerten Saugrohrs 12 Fremdluft angesaugt wird. Der Faltenbalg 23 ist beispielsweise mit Hilfe von Schellen oder Klemmen am jeweils zylindrischen Halteansatz und dem Halter 16 befestigt.

Weiterhin weist der Halter 16 außenseitig an seinem gegenüberliegenden Endbereich unterhalb des Sauganschlusses 20 außenseitig einen umlaufenden Absatz auf, der einen Anschlag 24 bildet. An diesem Anschlag liegt der Greifer 2 an einer in FIG 1 gestrichelt dargestellten Greiferplatte 26 an. Im Bereich des Sauganschlusses 20 ist weiterhin eine Ringdichtung 28 vorgesehen.

Wie insbesondere auch aus der FIG 2 hervorgeht, ist das Dichtelement 10 endseitig des Hülsenrohres 6 in einem Befestigungsabschnitt 30 außenseitig aufgestülpt. Das Dichtelement 10 steht über eine Stirnkante 32 des Hülsenrohrs 6 um einen Überstand a über, der beispielsweise im Bereich von lediglich 3 bis 8 mm liegt.

Im Befestigungsabschnitt 30 weist das Hülsenrohr 6 einen reduzierten Außendurchmesser Aᵣ auf. Oberhalb des Befestigungsabschnittes 30 weist das Hülsenrohr 6 einen konstanten, gleichbleibenden normalen Außendurchmesser An auf. Das Hülsenrohr 6 weist daher außenseitig eine Stufe auf, an der das Dichtelement 10 anschlägt. Das Dichtelement 10 steht radial nur geringfügig, beispielsweise im Bereich von 1 bis 2 mm über, so dass möglichst keine Störkanten etc. gebildet sind. Der normale Außendurchmesser An liegt beispielsweise im Bereich von etwa 65 mm. Die Länge L des freien Innenbereichs 9 liegt im Ausführungsbeispiel im Bereich von etwa 125 mm. Die Komponenten des Greifers 2, nämlich die Hülse 4, das Saugrohr 12 sowie der Halter 16 weisen im Ausführungsbeispiel jeweils eine kreisrunde Querschnittsgeometrie auf.

Im Anschluss an den Befestigungsbereich 30 weist das Hülsenrohr in einem Mittenbereich 33 bis nahezu zum Hülsenboden 8 einen vergrößerten Innendurchmesser Iᵥ auf. Dies wird durch eine Reduzierung der Wanddicke des Hülsenrohres 6 in diesem Mittenbereich 33 erzielt. Entsprechend weist die Innenseite des Hülsenrohres 6 zur Begrenzung dieses Mittenbereiches jeweils stufenartige Absätze auf. Im Befestigungsabschnitt 30 und im Übergangsbereich zu diesem Mittenbereich 33 weist der Hülsenboden 6 durch diese Maßnahme eine in etwa Z-förmige Ausgestaltung auf, wie sie in FIG 2 gut zu erkennen ist.

Der im Vergleich zu dem normalen Innendurchmesser Iₙ vergrößerte Innendurchmesser Iᵥ im Mittenbereich 33, der sich daher nahezu über die gesamte Länge des freien Innenraums 9 erstreckt, hat den besonderen Vorteil, dass dadurch ein möglichst großer Innendurchmesser Iᵥ bereitgestellt ist, um die unterschiedlichsten Flaschenhalstypen oder auch Verschlussarten sicher aufnehmen zu können und ein Verklemmen möglichst sicher zu verhindern. Der normale Innendurchmesser Iₙ liegt dabei vorzugsweise über 50 mm, im Ausführungsbeispiel bei etwa 55 mm. Die Innenseite des Hülsenrohres 6 im Mittenbereich 33 fluchtet dabei zumindest annähernd mit der Innenseite des Dichtelements 10, so dass also lediglich im Befestigungsbereich 30 eine Verengung im Vergleich zum Mittenbereich 33 ausgebildet ist. Durch diese Maßnahme wird insgesamt eine optimale Raumausnutzung erzielt. Untersuchungen haben gezeigt, dass dies bei einigen Flaschentypen von entscheidender Bedeutung ist, um zuverlässig die Flaschen 36 wieder frei geben zu können, wenn die Unterdruckversorgung abgeschaltet ist, so dass die Flaschen 36 allein aufgrund ihres Eigengewichtes automatisch in einer abgestellten Position verbleiben und die Hülsen 4 nach oben abgehoben werden können.

In FIG 3 ist eine Greifsituation dargestellt, bei der der Greifer 2 auf einen Flaschenhals 34 einer Flasche 36 aufgesetzt ist. Wie hieraus zu erkennen ist, legt sich das Dichtelement 10 am Flaschenhals 34 ringförmig dichtend an und ermöglicht so, dass im freien Innenraum 9 ein Unterdruck/Vakuum erzeugt wird.

In FIG 3 ist eine spezielle Ausgestaltung des Dichtelements 10 gezeigt, bei dem dieses endseitig abgeschrägt ist. Hierdurch wird ein radiales Aufspreizen beim Aufsetzen auf den Flaschenhals 34 begünstigt und ein Umbiegen des freien Endes des Dichtelements 10 um die Stirnkante 32 möglichst vermieden. Ein solches Umbiegen zeigte sich teilweise bei Versuchen aufgrund der üblicherweise hohen Reibung zwischen dem Gummi des Dichtelements 10 und dem Flaschenhals 34. Alternative Geometrien des Dichtelements 10, beispielsweise eine zur in Fig. 3 gegenläufige Abschrägung an der Innenseite, eine beidseitig Abschrägung etc. sind ebenfalls möglich. Um eine Beschädigung des Dichtelements 10 möglichst zu verhindern ist daher alternativ oder ergänzend zu der in FIG 3 gezeigten Abschrägung die Stirnkante 32 des Hülsenrohres 6 abgerundet ausgebildet.

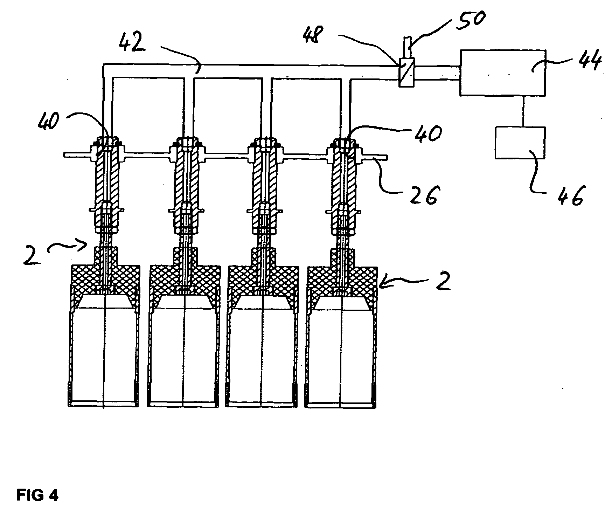

In FIG 4 ist eine Bearbeitungsanlage mit beispielhaft vier nebeneinander angeordneten Greifern 2 dargestellt. Diese sind in der Greiferplatte 26 in jeweiligen Halteöffnungen 40 gehalten, durch die die Greifer 2 mit ihrem jeweiligen Halter 16 hindurch gesteckt sind, so dass der Sauganschluss 20 an der Oberseite der Greiferplatte 26 frei zugänglich ist. Die einzelnen Greifer 2 sind an einer gemeinsamen Saugleitung 42 angeschlossen, die zu einer Saugpumpe 44 führen, wie dies schematisiert dargestellt ist. Der Betrieb der Bearbeitungsanlage wird mittels einer Steuereinrichtung 46 gesteuert. Im Ausführungsbeispiel ist ein Steuerventil 48 dargestellt, über das die Greifer 2 mit Unterdruck beaufschlagt werden bzw. wieder mit Normaldruck versorgt werden. Das Steuerventil 48 ist hierzu als ein Mehrwegeventil ausgebildet, welches die Saugleitung 42 einerseits mit der Saugpumpe 44 und andererseits mit einer Belüftungsleitung 50 verbinden kann.

Im Betrieb wird die Greifvorrichtung mit der Greiferplatte 26 und den Greifern 2 in geeigneter Relativposition bzgl. der zu greifenden Flaschen 36 gebracht, anschließend abgesenkt, so dass die einzelnen Greifer 2 auf die jeweiligen Flaschen 36 aufgestülpt werden. Die Zustellung in Längsrichtung (Höhenposition) kann hierbei weggesteuert oder auch kraftgesteuert erfolgen. Der über die gleitende Lagerung des Saugrohres 16 ermöglichte Toleranzausgleich ist hierbei von entscheidender Bedeutung, um ein zuverlässiges Greifen einer jeden Flasche 36 zu ermöglichen.

Sobald die Greifer 2 auf den Flaschen aufgesetzt sind wird der Unterdruck angelegt, d. h. über das Steuerventil 48 wird insbesondere die Saugleitung 42 mit der Saugpumpe 44 verbunden, so dass in den freien Innenräumen 9 jeweils ein Unterdruck erzeugt wird und dadurch eine ausreichende Haltekraft ausschließlich durch den Unterdruck erzeugt wird. Anschließend kann ein Anheben aller durch die Greifvorrichtung gegriffenen Flaschen 36 und ein Umsetzen an eine gewünschte Position erfolgen. Zum Freigeben wird in bevorzugter Weise lediglich das Steuerventil 48 umgeschalten, so dass die Saugleitung 42 mit der Belüftungsleitung 50 verbunden ist, so dass also der Unterdruck in den Innenräumen 9 wieder abgebaut wird und der Druck sich dem Umgebungsdruck zumindest annähert. Die Flaschen 36 können dann allein aufgrund ihres Eigengewichts freigegeben werden, d. h. die einzelnen Greifer 2 können nach oben abgezogen werden. Hierfür ist entscheidend, dass die Flaschen 36 sich innerhalb der Greifer 2 nicht verkanten und dass darüber hinaus das Dichtelement nicht am Flaschenhals 34 haften bleibt. Um letzteres zu vermeiden ist der Überstand a des Dichtelements 10 entsprechend klein gewählt. Untersuchungen haben gezeigt, dass längere Überstände zu einem Haften des Dichtelements am Flaschenhals 34 führen, so dass die Flasche 36 trotz freigegebenen Unterdruck (Normaldruck) nicht zuverlässig und prozesssicher vom Greifer 2 freigegeben wird. Im Hinblick auf das erstgenannte Problem eines möglichen Verkantens oder Sperrens der Flasche im Innenraum 9 hat sich bei einigen Flaschentypen der vergrößerte Innendurchmesser Iᵥ als entscheidend herausgestellt.

Insgesamt ist daher durch die spezielle Ausgestaltung des hier beschriebenen Greifers 2 ein prozesssicheres, einfaches Greifen von Flaschen unterschiedlichster Flaschentypen mit nur einem Greifertyp ermöglicht.

### Bezugszeichen

- 2: Greifer
- 4: Hülse
- 6: Hülsenrohr
- 8: Hülsenboden
- 9: freier Innenraum
- 10: Dichtelement
- 12: Saugrohr
- 14: Gewinde
- 16: Halter
- 18: Mutter
- 20: Sauganschluss
- 22: Kragen
- 23: Dichtbalg
- 24: Anschlag
- 26: Greiferplatte!
- 28: Ringdichtung
- 30: Befestigungsbereich
- 32: Stirnkante
- 33: Mittenbereich
- 34: Flaschenhals
- 36: Flansch
- 38: Greiferplatte!
- 40: Halteöffnung
- 42: Saugleitung
- 44: Saugpumpe
- 46: Steuereinheit
- 48: Steuerventil
- 50: Belüftungsleitung
- L: freie Innenlänge
- Iᵥ: vergrößerter Innendurchmesser
- Iₙ: normaler Innendurchmesser
- Aᵣ: reduzierter Außendurchmesser
- An: normaler Außendurchmesser
- h: Hubhöhe

## Patentansprüche

1. Greifer (2) für Flaschen, umfassend eine Hülse (4) mit einem Hülsenkörper (6) zum Aufsetzen auf einen Flaschenhals (34) der Flasche (36), wobei die Hülse (4) als eine Vakuumhülse ausgebildet ist und ein Sauganschluss (20) angeordnet ist, an den eine Saugleitung anschließbar ist zur Erzeugung eines Unterdrucks in der Hülse (4), wenn diese auf dem Flaschenhals (34) aufgesetzt ist, wobei
die Hülse (4) einen Hülsenboden (8) aufweist, durch den ein Saugrohr (12) gleitverschieblich durchgeführt ist und das Saugrohr (12) an einem den Sauganschluss (20) aufweisenden Halter (16) befestigt ist, **dadurch gekennzeichnet, dass** der Halter (16) nach Art eines Rohres ausgebildet ist, in das das Saugrohr (12) eingesteckt ist, so dass der durch das Saugrohr (12) gebildete Strömungspfad im Inneren des Halters (12) zum Sauganschluss (20) weitergeführt ist, und dass zwischen der Hülse (4) und dem Halter (16) ein elastisches Abdichtelement (23) zur Vermeidung des Ansaugens von Fremdluft angeordnet ist.

2. Greifer (2) nach Anspruch 1,
**dadurch gekennzeichnet, dass**
an der Hülse (4) ein Dichtelement (10) angeordnet ist, das die Hülse (4) zur Flasche (36) abdichtet.

3. Greifer (2) Anspruch 2,
**dadurch gekennzeichnet, dass**
das Dichtelement (10) endseitig am Hülsenkörper (6) in einem Befestigungsabschnitt (30) befestigt ist und über den Hülsenkörper (6) übersteht, insbesondere 3 bis 8 mm übersteht.

4. Greifer (2) nach Anspruch 3,
**dadurch gekennzeichnet, dass**
das Dichtelement (10) im Befestigungsabschnitt (30) außenseitig über den Hülsenkörper (6) gestülpt ist und der Außendurchmesser (Aᵣ) des Hülsenkörpers (6) im Befestigungsabschnitt (30) insbesondere reduziert ist.

5. Greifer (2) nach Anspruch 3 oder 4,
**dadurch gekennzeichnet, dass**
der Hülsenkörper (6) endseitig eine Stirnkante (32) aufweist, die abgerundet ausgebildet ist.

6. Greifer (2) nach einem der Ansprüche 3 bis 5,
**dadurch gekennzeichnet, dass**
das Dichtelement (30) stirnendseitig verjüngt ist.

7. Greifer (2) nach einem der Ansprüche 3 bis 6,
**dadurch gekennzeichnet, dass**
im Anschluss an den Befestigungsabschnitt (30), ein Innendurchmesser (Iᵥ) des Hülsenkörpers (6) im Vergleich zu einem Innendurchmesser (Iₙ) im Befestigungsabschnitt (30) vergrößert ist.

8. Greifer (2) nach einem der vorhergehenden Ansprüche,
**dadurch gekennzeichnet, dass**
das Saugrohr (12) an dem Halter (16) zur Einstellung der Längenposition des Saugrohrs (12) bezüglich des Halters (16) einstellbar befestigt ist.

9. Greifer (2) nach Anspruch 8,
**dadurch gekennzeichnet, dass** das Abdichtelement als Dichtbalg (23) ausgebildet ist.

10. Greifer (2) nach einem der Ansprüche 8 bis 9,
**dadurch gekennzeichnet, dass**
der Halter (16) außenseitig einen Anschlag (24) für eine Greiferplatte (26) aufweist, in die der Greifer (2) einsetzbar ist.

11. Bearbeitungsmaschine mit einer Anzahl von Greifern (2) nach einem der vorhergehenden Ansprüche umfassend eine Saugpumpe (44) zur Erzeugung eines Unterdrucks, die saugseitig vorzugsweise über zumindest ein Steuerventil (48) mit den einzelnen Greifern (2) verbunden ist.

12. Bearbeitungsmaschine nach Anspruch 11 mit einer Greiferplatte (26), die eine Vielzahl von Halteöffnungen (40) aufweist, in denen jeweils ein Greifer (2) gehalten ist.

13. Verfahren zur Handhabung von Flaschen mit einem Greifer (2) nach einem der Ansprüche 1 bis 10.

## Claims

1. Gripper (2) for bottles, comprising a sleeve (4) having a sleeve body (6) for putting on a bottleneck (34) of the bottle (36), wherein the sleeve (4) is formed as a vacuum sleeve and a suction connection (20) is arranged, to which a suction line is able to be connected for the generation of a vacuum in the sleeve (4) if this is put on the bottle neck (34), wherein the sleeve (4) has a sleeve base (8), through which the one suction pipe (12) is passed in a sliding manner and the suction pipe (12) is fastened to a holder (16) having the suction connection (20),
**characterised in that**
the holder (16) is formed in the form of a pipe into which the suction pipe (12) is inserted such that the flow path formed by the suction pipe (12) is guided further to the suction connection (20) in the interior of the holder (12), and that an elastic sealing element (23) is arranged between the sleeve (4) and the holder (16) to prevent the sucking in of external air.

2. Gripper (2) according to claim 1,
**characterised in that**
a sealing element (10) is arranged on the sleeve (4) which seals the sleeve (4) to the bottle (36).

3. Gripper (2) according to claim 2,
**characterised in that**
the sealing element (10) is fastened to the sleeve body (6) on the end side in a fastening section (30) and protrudes over the sleeve body (6), in particular protrudes by 3 to 8mm.

4. Gripper (2) according to claim 3,
**characterised in that**
the sealing element (10) is put over the sleeve body (6) on the outer side in the fastening section (30) and the outer diameter (Aᵣ) of the sleeve body (6) is in particular reduced in the fastening section (30).

5. Gripper (2) according to claim 3 or 4,
**characterised in that**
the sleeve body (6) has a front edge (32) on the end side which is formed to be rounded.

6. Gripper (2) according to one of claims 3 to 5,
**characterised in that**
the sealing element (30) is tapered on the front end-side.

7. Gripper (2) according to one of claims 3 to 6,
**characterised in that**
in connection to the fastening section (30), an inner diameter (Iᵥ) of the sleeve body (6) is increased in comparison to an inner diameter (Iₙ) in the fastening section (30).

8. Gripper (2) according to one of the preceding claims,
**characterised in that**
the suction pipe (12) is fastened to the holder (16) to be adjustable with respect to the holder (16), for the adjustment of the longitudinal position of the suction pipe (12).

9. Gripper (2) according to claim 8,
**characterised in that**
the sealing element is formed as a sealing bellows (23).

10. Gripper (2) according to one of claims 8 to 9,
**characterised in that**
the holder (16) has a stop (24) for a gripper plate (26) on the outer side, into which gripper plate (26) the gripper (2) is able to be inserted.

11. Processing machine having a number of grippers (2) according to one of the preceding claims, comprising a suction pump (44) for the generation of a vacuum which is preferably connected on the suction side to the individual grippers (2) via at least one control valve (48).

12. Processing machine according to claim 11, having a gripper plate (26) which has a plurality of retaining holes (40), in each of which a gripper (2) is held.

13. Method for handling bottles with a gripper (2) according to one of claims 1 to 10.

## Revendications

1. Préhenseur (2) pour bouteilles, comprenant un fourreau (4) avec un corps de fourreau (6) destiné à être appliqué sur un goulot de bouteille (34) de la bouteille (36), préhenseur
dans lequel le fourreau (4) est réalisé sous la forme d'un fourreau à vide sur lequel est agencé un raccord d'aspiration (20) auquel peut être raccordée une conduite d'aspiration pour produire une dépression dans le fourreau (4) lorsque celui-ci est appliqué sur le goulot de bouteille (34), et
dans lequel le fourreau (4) comporte un fond de fourreau (8) traversé en coulissement longitudinal par un tube d'aspiration (12), et le tube d'aspiration (12) est fixé sur un support (16) qui présente le raccord d'aspiration (20),
**caractérisé**
**en ce que** le support (16) est réalisé à la manière d'un tube dans lequel est engagé le tube d'aspiration (12), de sorte que le chemin d'écoulement formé par le tube d'aspiration (12) est poursuivi à l'intérieur du support (12) jusqu'au raccord d'aspiration (20), et en ce qu'entre le fourreau (4) et le support (16) est agencé un élément d'étanchéification élastique (23) pour éviter l'aspiration d'air externe.

2. Préhenseur (2) selon la revendication 1,
**caractérisé**
**en ce que** sur le fourreau (4) est agencé un élément d'étanchéité (10) qui assure l'étanchéité du fourreau (4) par rapport à la bouteille (36).

3. Préhenseur (2) selon la revendication 2,
**caractérisé**
**en ce que** l'élément d'étanchéité (10) est fixé, à son extrémité, au corps de fourreau (6), au niveau d'un tronçon de fixation (30), et dépasse du corps de fourreau (6), à savoir dépasse notamment de 3 à 8 mm.

4. Préhenseur (2) selon la revendication 3,
**caractérisé**
**en ce que** l'élément d'étanchéité (10) est emmanché pardessus le côté extérieur du corps de fourreau (6) au niveau du tronçon de fixation (30), et le diamètre extérieur (Aᵣ) du corps de fourreau (6) est notamment réduit dans la zone du tronçon de fixation (30).

5. Préhenseur (2) selon la revendication 3 ou la revendication 4,
**caractérisé**
**en ce que** le corps de fourreau (6) présente à son extrémité, un bord frontal (32), qui est de configuration arrondie.

6. Préhenseur (2) selon l'une des revendications 3 à 5,
**caractérisé**
**en ce que** l'élément d'étanchéité (30) est rétréci du côté de son extrémité frontale.

7. Préhenseur (2) selon l'une des revendications 3 à 6,
**caractérisé**
**en ce qu'**à la suite du tronçon de fixation (30), un diamètre intérieur (Iᵥ) du corps de fourreau (6) est agrandi par rapport à un diamètre intérieur (Iₙ) dans le tronçon de fixation (30).

8. Préhenseur (2) selon l'une des revendications précédentes,
**caractérisé**
**en ce que** le tube d'aspiration (12) est fixé de manière réglable sur le support (16), en vue de régler la position longitudinale du tube d'aspiration (12) par rapport au support (16).

9. Préhenseur (2) selon la revendication 8,
**caractérisé**
**en ce que** l'élément d'étanchéification est réalisé sous la forme d'un soufflet d'étanchéité (23).

10. Préhenseur (2) selon l'une des revendications 8 à 9,
**caractérisé**
**en ce que** le support (16) présente sur le côté extérieur, une butée (24) pour une plaque de préhenseur (26) dans laquelle peut être inséré le préhenseur (2).

11. Machine de traitement avec un certain nombre de préhenseurs (2) selon l'une des revendications précédentes, comprenant une pompe d'aspiration (44) destinée à produire une dépression, qui est reliée, du côté aspiration, par l'intermédiaire d'au moins une vanne de commande (48), aux différents préhenseurs individuels (2).

12. Machine de traitement selon la revendication 11, comprenant une plaque de préhenseur (26), qui présente une pluralité d'ouvertures de maintien (40) dans chacune desquelles est maintenu respectivement un préhenseur (2).

13. Procédé pour la manipulation de bouteilles à l'aide d'un préhenseur (2) selon l'une des revendications 1 à 10.
